Europäisches Patentamt

European Patent Office

Office européen des brevets

(19)

(11) Numéro de publication : **0 005 662**
**B1**

(12) **FASCICULE DE BREVET EUROPÉEN**

(45) Date de publication du fascicule du brevet :
28.04.82

(21) Numéro de dépôt : **79400290.7**

(22) Date de dépôt : **07.05.79**

(51) Int. Cl.³ : **G 01 P  5/00, B 64 D 43/02,
G 05 D  1/00, G 08 B 21/00**

(54) **Dispositif de détection rapide de gradient de vent.**

(30) Priorité : **08.05.78 FR 7813515**

(43) Date de publication de la demande :
**28.11.79 (Bulletin 79/24)**

(45) Mention de la délivrance du brevet :
**28.04.82 Bulletin 82/17**

(84) Etats contractants désignés :
**BE CH DE GB IT**

(56) Documents cités :
**FR - A - 1 475 065
FR - A - 2 334 110
US - A - 3 379 396
US - A - 3 510 090
US - A - 3 614 036
US - A - 3 814 912
US - A - 3 840 200
US - A - 4 012 713**

(73) Titulaire : **SOCIETE FRANCAISE D'EQUIPEMENTS
POUR LA NAVIGATION AERIENNE (S.F.E.N.A.)**
**B.P. 59 Aérodrome de Villacoublay**
**F-78140 Velizy Villacoublay (FR)**

(72) Inventeur : **Lebrun, Jean-Louis**
**21, avenue Jeanne d'Arc**
**F-92160 Antony (FR)**

(74) Mandataire : **Kavos, Stéphane**
**B.P. 59 Aérodrome de Villacoublay**
**F-78140 Velizy Villacoublay (FR)**

Imprimerie Jouve, 18, rue St-Denis, 75001 Paris, France

## 0 005 662

### Dispositif de détection rapide de gradient de vent

La présente invention concerne des perfectionnements au système de détection rapide d'un gradient de vent selon le brevet FR-A-2 334 110. Le système décrit dans ce brevet utilise, pour la détection des gradients de vent, la relation existant entre la pente aérodynamique $\gamma_a$, la pente totale $\gamma_T$ et la vitesse anémométrique V, cette relation s'énonçant :

$$(\gamma_T - \gamma_a)\, g - s\frac{(V - Vsel)}{1 + 0{,}2\, s} = A$$

Dans cette formule, g est l'accélération de la pesanteur, s est l'opérateur de Laplace, Vsel est une vitesse de consigne et A est une valeur qui est sensiblement constante ou nulle, en cas de vol normal sans perturbations, et qui croît dans le cas d'un gradient de vent, vent avant devenant vent arrière.

Ce système détecte les variations de la grandeur A et délivre un signal d'avertissement, lorsque cette valeur s'élève au-dessus d'un seuil prédéterminé.

On a tout d'abord pensé à attribuer à ce seuil une valeur fixe.

Une telle solution présente cependant l'inconvénient de ne pas tenir compte de l'aptitude de l'aérodyne à surmonter les perturbations engendrées par le gradient de vent.

D'une manière générale on entend par gradient de vent toute variation importante du vecteur vent (avec éventuellement inversion), qui se produit le long de la trajectoire de vol de l'aérodyne.

L'invention a donc tout d'abord pour but de supprimer cet inconvénient. Elle propose, à cet effet, un perfectionnement qui consiste, au lieu de comparer la valeur A à une valeur de référence fixe ou variable, à mélanger cette valeur A à une valeur représentative de la capacité de l'aérodyne à surmonter le gradient de vent, de manière à obtenir un signal composite qui est comparé à une valeur de référence.

Plus précisément elle concerne un dispositif tel que défini dans la revendication 1, où la valeur représentative de la capacité de l'aérodyne à surmonter le gradient de vent est la valeur de l'incidence $\alpha$ de l'aérodyne, la valeur de référence étant alors homogène à cette incidence.

L'invention a en outre pour but la détection rapide d'un gradient de vent utilisant dans le calcul de la grandeur A, au lieu des paramètres $\gamma_a$ et $\gamma_T$, comme précédemment, les informations fournies par une centrale inertielle.

Pour atteindre ce but, l'invention propose un dispositif qui permet d'obtenir la grandeur A en effectuant la dérivée par rapport au temps de la différence entre la vitesse V, fournie par une centrale anémométrique, et la vitesse sol $V_x$, détectée par la centrale à inertie.

Des modes de réalisation de l'invention seront décrits ci-après, à titre d'exemples non limitatifs, avec référence aux dessins annexés dans lesquels :

La figure 1 est un schéma-bloc d'un système ou dispositif de détection d'un gradient de vent, tenant compte de l'incidence actuelle de l'aérodyne, dans le cas où la grandeur A est calculée à l'aide des paramètres $\gamma_a$, et $\gamma_T$ ;

La figure 2 est un schéma-bloc d'un circuit permettant l'élaboration de la grandeur A, à l'aide des informations fournies par une centrale inertielle ;

La figure 3 est un diagramme représentant les variations de la vitesse du vent, et de la vitesse aérodynamique de l'aérodyne, en fonction du temps, au cours d'une période où il se produit un gradient de vent ;

Les figures 4, 5 et 6, représentent schématiquement un variomètre équipé du voyant d'alarme lumineux d'un système de détection rapide d'un gradient de vent, les indications fournies par ce variomètre perfectionné correspondant respectivement aux trois phases principales du gradient de vent.

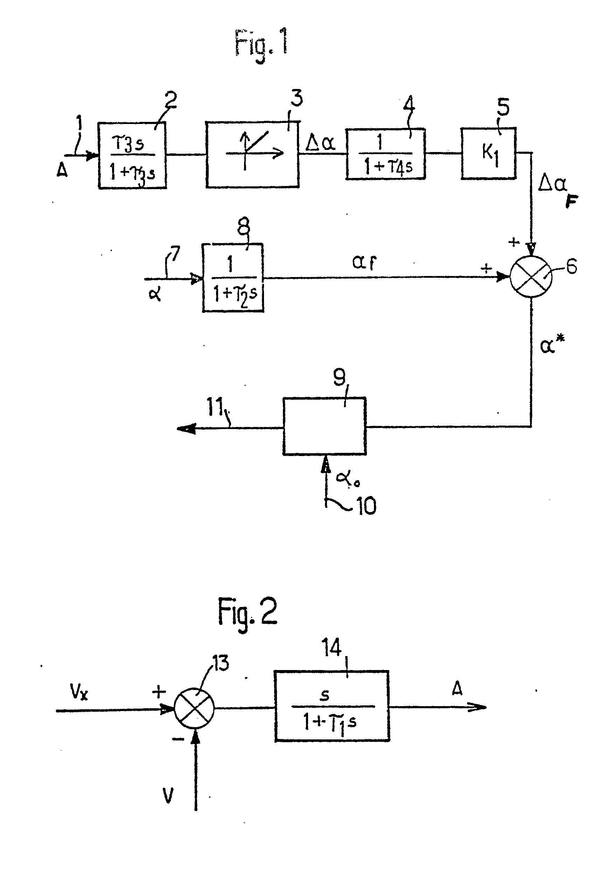

Avec référence à la figure 1, le signal représentatif de la grandeur A qui peut être fourni (flèche 1) par un circuit résolvant l'équation :

$$(\gamma_T - \gamma_a)\, g - s\frac{(V - Vsel)}{1 + 0{,}2\, s}$$

est tout d'abord transmis à un filtre 2 de fonction de transfert de la forme $\tau_s/1 + \tau_3\, s$, qui sert à se soustraire des erreurs d'instruments (en particulier ceux qui servent à la détermination de $\gamma_T$ et de $\gamma_a$) et qui est sensible au changement de sens de la grandeur A.

Ce filtre 2 est lui-même relié à un circuit conducteur directionnel 3 tel qu'une diode dont la fonction est de ne transmettre que les signaux (généralement positifs) correspondant à des gradients de vent dangereux se traduisant par une diminution brutale de la vitesse anémométrique de l'avion.

Le signal

$$\Delta\alpha = \left[\frac{\tau_3\, s}{1 + \tau_3\, s}\, A\right] \geqslant 0$$

2

fourni par ce circuit 3 est transmis à un filtre 4 dont la fonction de transfert est de la forme $1/1 + \tau_4$ s, qui permet d'éliminer les turbulences de façon à éviter les alarmes intempestives. Le filtre 4 est relié à un amplificateur 5 de gain $K_1$. Ce filtre 4 sert à rendre le signal, qui au départ est exprimé en mètre/seconde$^2$, homogène à un signal d'incidence exprimé en degrés.

Le signal $\Delta\alpha_F$ fourni par ce filtre est ensuite transmis à un additionneur 6, qui reçoit un signal $\alpha_f$ représentatif de l'incidence $\alpha$ (flèche 7) de l'aérodyne émanant d'un détecteur d'incidence associé à un filtre 8 de fonction de transfert $1/1 + \tau_2$ s. A titre indicatif, les constantes de temps $\tau_2$, $\tau_3$ et $\tau_4$, peuvent être égales à trois secondes, en ce qui concerne $\tau_2$ et $\tau_4$, et à dix secondes, pour ce qui concerne $\tau_3$.

Le signal $\alpha^* = \alpha_f + \Delta\alpha_F$, fourni par l'additionneur 6, est transmis à un détecteur de niveau 9, qui compare le signal $\alpha^*$ à un signal $\alpha_o$ de référence (flèche 10) et qui transmet à un signal d'alarme (flèche 11) lorsque * devient supérieur à $\alpha_o$.

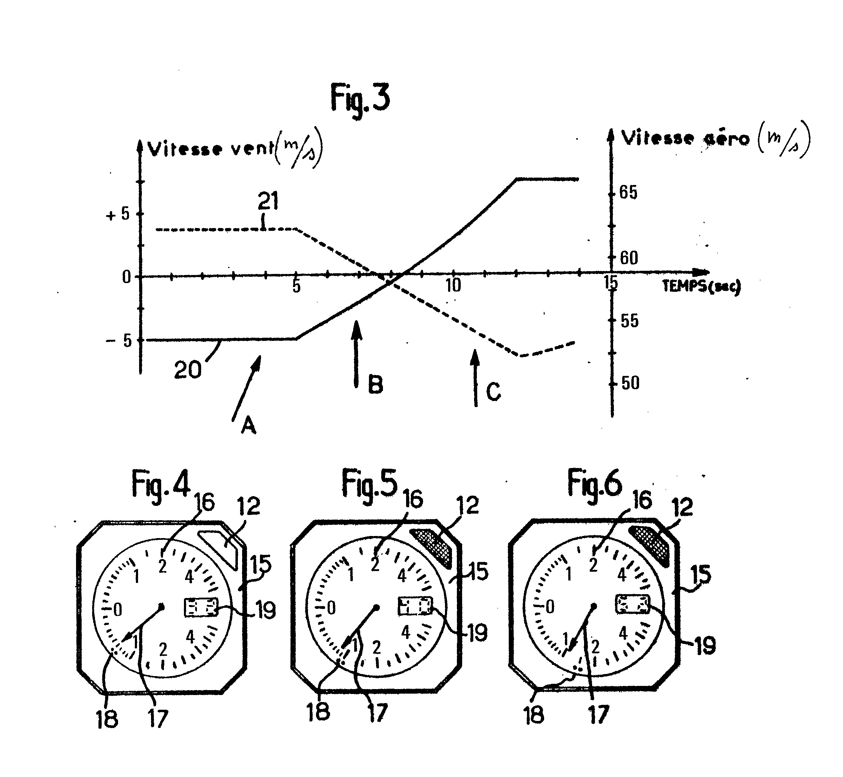

Ce signal d'alarme peut notamment provoquer l'allumage d'un voyant lumineux 12 disposé sur le quadrant d'un variomètre perfectionné, comme représenté dans les figures 4, 5 et 6.

Avec référence à la figure 2, dans le cas où l'aérodyne est équipé d'une centrale à inertie ou tout autre dispositif capable de générer la vitesse sol, la grandeur A peut être calculée non plus à partir de la formule :

$$(\gamma_T - \gamma_a)\, g - s\,\frac{(V - Vsel)}{1 + 0{,}2\, s} = A$$

mais à partir du module de la vitesse sol $V_x$ et à partir de la vitesse aérodynamique V issue par exemple d'une centrale anémométrique. La grandeur A est ici assimilée à la projection de la dérivée du vecteur le long de la trajectoire du vent.

Le circuit permettant un tel calcul comprend un soustracteur 13 effectuant la différence $V_x - V$ et un dérivateur 14 de fonction de transfert $s/1 + \tau_1$ s monté à la sortie de ce soustracteur.

La grandeur A obtenue est alors de la forme :

$$A = \frac{s}{1 + \tau_1\, s}\, (V_x - V)\,.$$

Dans le cas où on utilise un tel circuit pour la détermination de la grandeur A, son raccordement au circuit représenté figure 1 s'effectue directement sur le circuit conducteur directionnel 3, en supprimant le filtre 2 de fonction de transfert $\tau_3\, s/1 + \tau_3$ s.

Par convention, le sens du vent est positif pour un vent arrière et négatif pour un vent de face (diagramme de la fig. 3).

Pour permettre au pilote de connaître instantanément les manœuvres qu'il a à effectuer pour surmonter les effets d'un gradient de vent, et ce, dès l'instant où le signal d'alarme est émis par le système de détection de gradient de vent, l'invention propose d'utiliser, comme signal d'alarme, un signal lumineux généré par un voyant lumineux 12 associé à un variomètre perfectionné comprenant (figures 4, 5 et 6) :

— un quadrant 15 comportant, de façon classique, une graduation 16 représentative d'une vitesse verticale ;

— une aiguille 17 indiquant sur ladite graduation la vitesse verticale instantanée $h^{*o}$ de l'aérodyne ;

— un index 18 représentatif de la vitesse verticale potentielle $d_T^o$ de l'aérodyne, mobile autour du quadrant et dont la position par rapport à l'aiguille 17 indique instantanément l'accélération sur la trajectoire de l'aérodyne, et éventuellement ;

— une indication par affichage numérique de la pente de l'aérodyne (affichage numérique 19).

D'une façon plus précise, dans le cas où l'aérodyne est équipé d'une centrale inertielle ou équivalent, la vitesse verticale instantanée de l'aérodyne fournie par l'aiguille 17 du variomètre perfectionné peut être calculée au moyen d'un organe de calcul résolvant l'équation :

$$h^{*o} = \frac{h^o\, A}{1 + \tau_1'\, s} \times \frac{1 + (\tau_1' + \tau_2')\, s}{1 + \tau_2'\, s} + \frac{\tau_1'}{1 + \tau_1'\, s} \times \frac{\tau_2'\, s}{1 + \tau_2'\, s}\, (j_z - g)$$

$j_z$ étant la composante verticale de l'accélération de l'aérodyne,

g étant l'accélération de la pesanteur,

$h^o$ A étant un signal de vitesse verticale pouvant provenir d'une centrale anémométrique,

s étant l'opérateur de Laplace,

$\tau_1'$ et $\tau_2'$ étant des constantes de temps.

Par ailleurs, la vitesse verticale potentielle $h_T^o$ de l'aérodyne est obtenue à partir de la formule

**0 005 662**

suivante :

$$h_f^o = h^{*o} + \frac{1}{g}\left(\frac{1}{1 + \tau_3' s} \times \frac{dVa}{dt} + \frac{\tau_3' s}{1 + \tau_3' s}\frac{dVx}{dt}\right) \times \frac{Vx}{1 + \tau_4 s}$$

dans laquelle :
Va est le module de la vitesse air,
Vx est le module de la vitesse sol.

## Revendications

1. Dispositif de détection rapide d'un gradient de vent, notamment au cours de la phase d'approche d'un aérodyne, en vue de son atterrissage, résultant de l'utilisation de la relation existant entre la pente aérodynamique $\gamma_a$, la pente totale $\gamma_T$ et la vitesse anémométrique V, relation pouvant être de la forme

$$(\gamma_T - \gamma_a)\, g\, - s\frac{(V - Vsel)}{1 + 0,2\, s} = A$$

dans laquelle s est l'opérateur de Laplace, A est une valeur qui est sensiblement constante ou nulle, en cas de vol normal sans perturbations, et qui croît dans le cas d'un gradient de vent, vent avant devenant vent arrière, et Vsel est une valeur de consigne, caractérisé en ce que ledit dispositif comprend un moyen de transformer la valeur A précitée en un signal $\Delta\alpha_F$ suivi d'un mélangeur dudit signal $\Delta\alpha_F$ avec un signal $\alpha_f$ représentatif de l'incidence $\alpha$ de l'aérodyne ce qui permet d'obtenir un signal composite que l'on compare à une valeur de référence homogène à cette incidence, et en ce que le circuit de transformation du signal A en un signal $\Delta\alpha_f$ comprend d'une part, un premier filtre (2) relié à un circuit conducteur directionnel (3), suivi d'un second filtre (4) et d'un amplificateur (5) ; et que le circuit délivrant le signal $\alpha_f$ précité représentatif de l'incidence $\alpha$ de l'aérodyne comprend un troisième filtre (8) associé au détecteur d'incidence $\alpha$ ledit dispositif de détection comprenant de plus un sommateur (6), additionnant les signaux $\Delta\alpha_F$ et $\alpha_f$ rendus homogènes et fournit un signal $\alpha^*$ qui commande un circuit d'alarme comprenant un comparateur ou détecteur de niveau (9), qui compare le signal $\alpha^*$ à un signal $\alpha_o$ de référence et qui émet un signal d'alarme (11) lorsque $\alpha^*$ devient supérieur à $\alpha_o$.

2. Dispositif selon la revendication 1, caractérisé en ce que la fonction de transfert du premier filtre (2) est de la forme $\tau_3 s/1 + \tau_3 s$, celle du deuxième filtre (4) est $1/1 + \tau_4 s$ et celle du troisième filtre (8) est $1/1 + \tau_2 s$, la valeur $\tau_2$ et de $\tau_4$ pouvant être de trois secondes et la valeur de $\tau_3$ pouvant être de dix secondes.

3. Dispositif selon l'une des revendications 1 ou 2, caractérisé en ce que le susdit signal d'alarme (11) commande l'éclairement d'un voyant lumineux (12) associé à un variomètre perfectionné, indiquant, par une aiguille et un quadrant (15) la vitesse verticale instantanée $h^{*o}$ de l'aérodyne, par un index mobile (18) autour dudit quadrant, la vitesse verticale potentielle $h_T^o$ et, éventuellement, au moyen d'un affichage numérique (19), la pente de l'avion.

## Claims

1. Device for rapidly detecting a wind gradient, particularly during the approach phase of an aerodyne, with a view to its landing, resulting from the use of the relationship existing between the aerodynamic slope $\gamma_a$, the total slope $\gamma_T$ and the anemometric speed V, which relationship may be in the form

$$(\gamma_T - \gamma_a)\, g\, - s\frac{(V - Vsel)}{1 + 0.2\, s}$$

in which s is the Laplace operator, A is a value which is substantially constant or zero, in the case of normal flight without disturbances, and which increases in the case of a wind gradient, a headwind becoming a following wind, and Vsel is a reference value, characterized in that said device comprises a means for transforming the above-mentioned value A into a signal $\Delta\alpha_F$ followed by a mixer mixing said signal $\Delta\alpha_F$ with a signal $\alpha_f$ representative of the incidence $\alpha$ of the aerodyne which allows a composite signal to be obtained which is compared with a reference value homogeneous at this incidence, and in that the circuit for transforming signal A into a signal $\Delta\alpha_F$ comprises on the one hand a first filter (2) connected to a directional conducting circuit (3), followed by a second filter (4) and by an amplifier (5) and in that the circuit delivering said signal $\alpha_f$ representative of the incidence of the aerodyne comprises

4

a third filter (8) associated with the incidence $\alpha$ detector, said detection device further comprising a summator (6), adding the signals $\Delta\alpha_F$ and $\alpha_f$ which have been made homogeneous and supplies a signal $\alpha^*$ which controls an alarm circuit comprising a comparator or level detector (9) which compares the signal $\alpha^*$ with a reference signal $\alpha_o$ and which emits an alarm signal (11) when $\alpha^*$ becomes greater than $\alpha_o$.

2. Device according to claim 1, characterized in that the transfer function of the first filter (2) is of the form $\tau_3 s/1 + \tau_3 s$, that of the second filter (4) is $1/1 + \tau_4 s$ and that of the third filter (8) is $1/1 + \tau_2 s$, the value $\tau_2$ and $\tau_4$ being able to be three seconds and the value of $\tau_3$ being able to be ten seconds.

3. Device according to one of claims 1 or 2, characterized in that said alarm signal (11) controls the illumination of an indicator lamp (12) associated with an improved variometer, indicating, by means of a needle and a quadrant (15), the instantaneous vertical speed $h^{*o}$ of the aerodyne, by means of an index (18) movable about said quadrant, the potential vertical speed $h_T^o$ and, possibly, by means of a digital display (19), the slope of the aircraft.

### Ansprüche

1. Einrichtung zur schnellen Feststellung des Windgefälles, insbesondere während des Landungsanfluges eines Drehflügelflugzeugs an einem Flughafen, aufgrund der Anwendung der Beziehung, die zwischen der aerodynamischen Neigung $\gamma_a$, der gesamten Neigung $\gamma_T$ und der Windegeschwindigkeit V besteht, welche die folgende Form haben kann

$$(\gamma_T - \gamma_a)\, g - s\, \frac{(V - Vsel)}{1 + 0{,}2\, s} = A$$

worin s der Laplace-Operator, A ein Wert, der im Falle eines normalen Fluges ohne Turbulenzen im wesentlichen konstant oder gleich Null ist und bei Vorhandensein eines Windgefälles, bei dem Gegenwind zu Rückenwind wird, zunimmt, und Vsel ein Sollwert ist, dadurch gekennzeichnet, daß die Einrichtung Mittel zum Transformieren des genannten Wertes A in ein Signal $\Delta\alpha_F$ enthält, auf die ein Mischer zum Mischen des Signals $\Delta\alpha_F$ mit einem Signal $\alpha_f$, das den Anflugwinkel $\alpha$ des Drehflügelflugzeuges darstellt, folgt, wodurch es ermöglicht wird, ein zusammengesetztes Signal zu erhalten, das mit einem mit diesem Anflugwinkel homogenen Bezugswert verglichen wird, und daß die Schaltung zur Transformation des Signals A in ein Signal $\Delta\alpha_F$ zum einen ein erstes Filter (2) enthält, das mit einem richtungsabhängigen Leitungskreis (3) verbunden ist, auf den ein zweites Filter (4) und ein Verstärker (5) folgen ; und daß die das genannte Signal $\alpha_f$, welches den Anflugwinkel $\alpha$ des Drehflügelflugzeugs darstellt, abgebende Schaltung ein drittes Filter (8) enthält, das dem Detektor für den Anflugwinkel $\alpha$ zugeordnet ist, wobei die Detektorvorrichtung ferner einen Summierer (6) enthält, der die homogen gemachten Signale $\Delta\alpha_F$ und $\alpha_f$ addiert und ein Signal $\alpha^*$ liefert, das eine Alarmschaltung steuert, die einen Komparator oder Pegeldetektor (9) enthält, welcher das Signal $\alpha^*$ mit einem Bezugssignal $\alpha^o$ vergleicht und ein Alarmsignal (11) abgibt, wenn $\alpha^*$ größer wird als $\alpha^o$.

2. Einrichtung nach Anspruch 1, dadurch gekennzeichnet, daß die Übertragungsfunktion des ersten Filters (2) die Form $\tau_3 s/1 + \tau_3 s$ aufweist, daß diejenige des zweiten Filters (4) $1/1 + \tau_4 s$ ist, und daß diejenige des dritten Filters (8) $1/1 + \tau_2 s$ ist, wobei der Wert $\tau_2$ und $\tau_4$ drei Sekunden betragen kann und der Wert von $\tau_3$ zehn Sekunden betragen kann.

3. Einrichtung nach Anspruch 1 oder 2, dadurch gekennzeichnet, daß das genannte Alarmsignal (11) das Aufleuchten einer Signallampe (12) steuert, die einem verbesserten Steig- und Sinkgeschwindigkeitsmesser zugeordnet ist, der durch einen Zeiger und einen Quadranten (15) die momentane Vertikalgeschwindigkeit $h^{*o}$ des Drehflügelflugzeugs, durch eine um den Quadranten herum bewegliche Markierung (18) die potentielle Vertikalgeschwindigkeit $h_T^o$ und ggf. mittels einer Digitalanzeige (19) die Neigung des Flugzeugs anzeigt.

Fig.1

Fig.2

Fig.3

Fig.4

Fig.5

Fig.6

0 005 662